# EUROPEAN PATENT SPECIFICATION

(11) **EP 0 528 483 B1**
(45) Date of publication and mention of the grant of the patent: **08.05.1996**
(21) Application number: 92202420.3
(22) Date of filing: 05.08.1992
(51) Int. Cl.: B01D 45/14

(54) **Smoke exhausting device with wet centrifugal dust extraction**
Rauchabzugsvorrichtung mit zentrifugaler Nassstaub-Extraktion
Aspirateur de fumée à dépoussiérage par centrigue à voie humide

(30) Priority: 09.08.1991 IT MI912244
(43) Date of publication of application: 24.02.1993
(73) Proprietor: NUOVA M.A.I.P., MACCHINE AGRICOLE INDUSTRIALI PIERALISI S.P.A., Jesi (Ancona) (IT)
(72) Inventor: Pieralisi, Gennaro, Jesi (Ancona) (IT)
(74) Representative: Raimondi, Alfredo, Dott. Ing. Prof.

(56) References cited:
- EP-A- 0 122 795
- WO-A-81/00060
- AT-B- 346 821

## Description

The object of this invention is a device for the wet separation and extraction of dust and other solid particles contained in a gaseous flow, such as smoke, or vapour, originating from industrial processing, from dryers or from any plants in which there takes place complete and/or incomplete combustion of organic substances with generation of smoke or vapour incorporating solid particles.

As is known, the smoke emitted from chimneys of heating plants and from industrial plants is nearly always harmful to health, particularly inasmuch as it contains in suspension unburnt particles, generally carbonous, which become dispersed in the atmospheric air.

Of a particularly harmful nature is, moreover, smoke which contains, in addition to carbon particles and other organic or metallic compounds, dust of various types and dimensions which is incorporated into the smoke emitted from the plants in question and is then dispersed in the air together with the said smoke.

To remove the suspended solid particles from the smoke there have been proposed various methods of purification, for example, subjecting the smoke at the chimney outlet to separation treatment using a cyclone system; another method involves subjecting the smoke to the action of an electrostatic field created between electrodes arranged in such a way as to attract the solid particles and cause them to be separated from the gaseous flow.

There are also known special devices for the extraction of specific solid substances contained in the smoke given off by the industrial processing of particular products, and in such cases the individual devices are designed and constructed in such a way as to prove suitable only for the purification of smoke containing solid particles of well-defined chemophysical characteristics. Examples of said known technologies are for instance disclosed by AT-B-346.821, WO-A-81/00 060 and EP-A-0 122 795

There exists therefore the problem of developing an improved device for the separation and extraction of powdery substances contained in gaseous flows, such as smoke and vapour, of any type whatsoever.

As a solution to this problem, the invention aims to develop a device for the extraction of dust of varying nature and provenance encountered in smoke from industrial plants, structured in such a way as to prove suitable for the separation and extraction of dust of any dimensions and also to provide high reliability and regularity in operation.

Another aim of the invention is to develop a device of the type specified above which is capable of being used also in conjunction with other devices for the extraction of smoke containing dust or the like in order to improve the efficiency of extraction.

A further aim of the invention is to develop a device which is particularly suitable for use in addition or as an alternative to the cyclone-type dust extraction device for a particular vegetation water drainage plant which has already been patented in the name of the same Applicant.

These and yet other aims, which may become more clearly apparent from the following description, are achieved by a device for the separation and extraction of dust contained in smoke and/or vapour from industrial plants, according to claim 1. Preferred features of the invention are delineated in dependent claims 2-5.

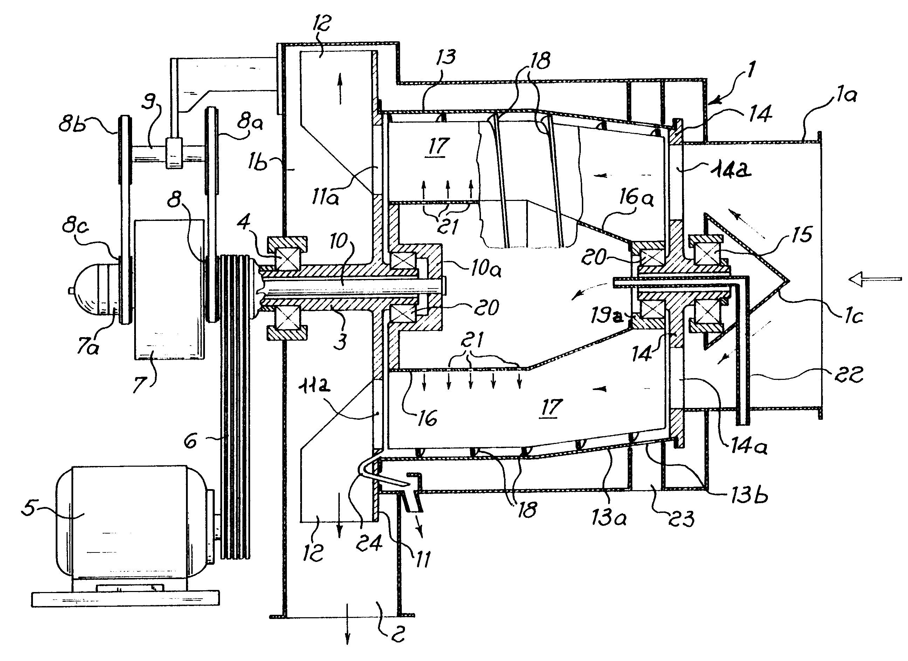

Further features and advantages of this invention will become more clearly apparent from the following detailed description of one of its preferred and non-exclusive forms of practical implementation, with reference to the accompanying drawing, given only as a guide, in which the sole figure shows in axial-diametrical cross-section a dust extraction device made according to the invention.

With reference to this sole figure, the device according to the invention consists of a box-shaped supporting body 1 of horizontal axis, provided at one end with a duct 1a for connection to a chimney or to another device emitting smoke to be cleansed of the dust contained therein; at the opposite end body 1 is shaped in such a way as to present a hollow body 1b of substantially spiral section, provided with a duct 2 for discharging the cleansed smoke, positioned with its axis at right angles to that 1a of entry of the said smoke.

On hollow body 1b is positioned a hollow shaft 3, capable of rotating on bearings 4, coaxially to the axis of supporting body 1. Such hollow shaft 3 is driven by a motor 5 via belts 6 and appropriate pulleys which simultaneously drive the enveloping body 7 of a reducer 7a, of epicyclical or like type, via a pulley 8 which, through a return shaft 9 and pulleys 8a, 8b and 8c with appropriate belts, causes the rotation of reducer 7a which in turn drives a shaft 10 located coaxially within hollow shaft 3.

To hollow shaft 3 there is also made integral a plate 11 of substantially circular shape provided with openings 11a, which is caused to rotate inside hollow body 1b; to such plate 11 are also secured blades 12, connected to openings 11a, which comprise an impeller capable of discharging the smoke to the exterior after it has been cleansed of dust, as will be more clearly described hereinafter.

To said disc-shaped plate 11, but on the side opposite that carrying blades 12, there is secured one end of a rotating drum 13 coaxial with hollow shaft 3 which drives it, while the opposite end of said drum 13 is secured to a circular-shaped plate 14 capable of rotating on a bearing 15, supported in turn by the middle part 1c of hollow supporting body 1.

Therefore, hollow shaft 3 carries in rotation drum 13, bladed impeller 12, envelope 7 of the reducer and pulley 8. Shaft 10, which is coaxial with hollow shaft 3 and driven by reducer 7a, carries in rotation a central assembly consisting of an end flange 10a, a hollow body 16 of cylindrical truncated cone shape 16a and coaxial with said shaft 10 and with rotating drum 13, a multiplicity of axial blades 17 radially projecting from central hollow body 16 so as to form an impeller, and a scroll 18 coaxially integral with the outer edge of axial blades 17 in order to rotate substantially in contact with the inner surface of rotating drum 13.

Central body 16 is kept guided at its ends by hubs 10a and 19a respectively, which rotate on bearings 20 respectively supported by hollow shaft 3 and by the middle part of plate 14. Furthermore, in vertical plate 14 of rotating drum 13 are provided radial openings 14a, angularly spaced for the entry of the smoke to be treated, while in the cylindrical wall of central hollow body 16 are provided holes or nozzles 21 for the passage of washing water supplied via a duct 22 coaxially traversing the fixed middle part 1c of the supporting body and hub 19a of central body 16. The device is also provided with a duct 23 for discharging the wet dust from the inner surface of rotating drum 13 and with a multiplicity of ducts 24 communicating with the inside of the rotating drum to drain off any surplus water built up after wetting of the dust.

The operation of the device described above may be briefly summarized as set forth hereunder.

The gaseous flow containing the dust to be separated enters axially into the device through fixed enveloping duct 1a via openings 14a, provided on disc 14 substantially constituting the front wall of rotating drum 13, and under the exhausting action of radial-bladed impeller 12 it traverses axially drum 13 where axial blades 17 impart to it a swirling movement.

During its passage the gaseous flow is attacked by the jets of washing water supplied by centrifugal action from nozzles 21, located in central body 16 and fed by axial duct 22. The water thus sprayed assimilates the dust which becomes weighed down and, by centrifugal action combined with the rotation of axial blades 17, the mass consisting of water and dust or solid particles contained in the gaseous flow is projected outward onto the inner surface of rotating drum 13.

Scroll 18, which rotates at a speed different from that of drum 13, conveys the wet dust along conical surface section 13a of the said drum 13, causing it to flow out of opening 13b of the drum and hence from outlet 23.

The mass of dust and water is effectively arranged in stratified form on the inner surface of drum 13, where it is dewatered by centrifugal action so that it may be conveyed to the outlet in the form of a continuous flow.

The gaseous flow, thus cleansed of solid particles, is conveyed from radial-bladed impeller 12 in outflow duct 2, while the part of washing water which is surplus, that is to say not absorbed by the dust, is distributed over the inner surface of the said drum to be subsequently discharged via a weir through various ducts 24.

## Claims

1. A device for the separation and extraction of dust and solid particles contained in smoke and/or vapour emitted from industrial plants, characterized in that it comprises a box-shaped supporting body (1), within which is mounted a drum (13) being rotatable around an horizontal axis, provided at one end with axial openings (14a) for the entry of the smoke to be cleansed and, at the opposite end, with an impeller (12) capable of exhausting and discharging the cleansed smoke through a radial duct (2), inside the rotatable drum (13) there being coaxially secured a hollow body (16) provided with holes (21) on the inner surface, with which is associated an axial-bladed impeller (17), there being also provided a scroll (18) located between such axial-bladed impeller (17) and the inner surface of such drum (13), rotatable at a speed different from that of the drum, to project the mass of water and dust against the inner surface of said drum (13), as well as means for supplying water to said hollow body (16) whose rotation provides a radial flow of water suitable for intercepting in the radial direction the flow of smoke exhausted in the axial direction and pushing the wet dust against the inner surface of such drum (13) and onto scroll (18) for the ejection thereof to the exterior.

2. A device according to claim 1, characterized in that said rotating drum (13) and said radial-bladed impeller (12) are driven directly by a motor (5), whilst said axial-bladed impeller (17) and said scroll (18) for ejecting the mass are operated by a reducer (7, 7a) driven in turn by the motor (5).

3. A device according to claim 1, characterized in that such washing water is supplied to such central body (16) through a duct (22) coaxial with the axis of rotation of the said central body.

4. A device according to one or more of the preceding claims, characterized in that it provides means of discharge (24) such as a weir associated with said rotating drum (13) and capable of draining any water not used for incorporating the dust.

5. A device according to the preceding claims, characterized in that such radial duct (2) for discharging the cleansed smoke is made with an internal spiral or the like.

## Patentansprüche

1. Vorrichtung zum Abscheiden und Beseitigen von Staub und Feststoffteilchen, die in Rauch und/oder Dampf enthalten sind, der von industriellen Anlagen emittiert wird, **dadurch gekennzeichnet**, daß sie einen kastenförmigen Tragekörper (1) umfaßt, in dem ein Zylinder (13) angebracht ist, der sich um eine horizontale Achse dreht, an einem Ende mit axialen Öffnungen (14a) zum Eintritt des zu reinigenden Rauchs versehen ist, und am anderen Ende mit einem Flügelrad (12), das den gereinigten Rauch über eine radiale Rohrleitung (2) absaugen und ableiten kann, wobei im Inneren des sich drehenden Zylinders (13) koaxial ein hohler Körper (16) befestigt ist, der mit Löchern (21) an der Innenfläche versehen ist, mit dem ein mit axialen Flügeln versehenes Flügelrad (17) verbunden ist, wobei des weiteren eine Schnecke (18) vorhanden ist, die zwischen diesem mit axialen Flügeln versehenen Flügelrad (17) und der Innenfläche dieses Zylinders (13) angeordnet ist, die sich mit einer anderen Geschwindigkeit als der Zylinder dreht, so daß die Masse aus Wasser und Staub an die Innenfläche des Zylinders (13) geschleudert wird, sowie eine Einrichtung, die dem hohlen Körper (16) Wasser zuführt, dessen Drehung einen radialen Wasserstrom erzeugt, der sich dazu eignet, in der radialen Richtung den Strom von Rauch zu schneiden, der in der axialen Richtung abgesaugt wird, und dazu, den feuchten Staub an die Innenfläche dieses Zylinders (13) und auf die Schnecke (18) zu drücken, so daß selbiger nach außen ausgestoßen wird.

2. Vorrichtung nach Anspruch 1, **dadurch gekennzeichnet**, daß der sich drehende Zylinder (13) und das mit radialen Flügeln versehene Flügelrad (12) direkt durch einen Motor (5) angetrieben werden, während das mit axialen Flügeln versehene Flügelrad (17) und die Schnecke (18), die die Masse ausstößt, durch ein Untersetzungsgetriebe (7,7a) angetrieben werden, das seinerseits durch den Motor (5) angetrieben wird.

3. Vorrichtung nach Anspruch 1, **dadurch gekennzeichnet**, daß das Waschwasser dem mittleren Körper (16) über eine Rohrleitung (22) zugeführt wird, die koaxial zur Drehachse des mittleren Körpers ist.

4. Vorrichtung nach einem der vorangehenden Ansprüche, **dadurch gekennzeichnet**, daß sie eine Einrichtung zum Ableiten (24), wie beispielsweise einen Überlauf, aufweist, die mit dem sich drehenden Zylinder (13) verbunden ist, und jegliches Wasser ableiten kann, das nicht zum Einschließen des Staubs genutzt wird.

5. Vorrichtung nach den vorangehenden Ansprüchen, **dadurch gekennzeichnet**, daß die radiale Rohrleitung (2) zum Ableiten des gereinigten Rauchs mit einer inneren Spirale oder dergleichen versehen ist.

## Revendications

1. Un dispositif pour la séparation et l'extraction de poussière et de particules solides contenues dans la fumée et/ou la vapeur émise(s) par des installations industrielles, caractérisé en ce qu'il comprend un corps de support en forme de boîte (1), à l'intérieur duquel est monté un tambour (13) pouvant tourner autour d'un axe horizontal, pourvu à une première extrémité d'ouvertures axiales (14a) pour l'entrée de la fumée à épurer et, à l'extrémité opposée, d'un ventilateur (12) capable d'aspirer et d'évacuer la fumée épurée à travers un conduit radial (2), à l'intérieur du tambour rotatif (13) se trouvant fixé coaxialement un corps creux (16) pourvu de trous (21) sur la surface intérieure, avec lequel est associé un ventilateur à ailettes axiales (17), étant également prévue une hélice (18) située entre ledit ventilateur à ailettes axiales (17) et la surface intérieure dudit tambour (13), pouvant tourner à une vitesse différente de celle du tambour, pour projeter la masse d'eau et de poussière contre la surface intérieure dudit tambour (13), ainsi que des moyens pour amener l'eau audit corps creux (16) dont la rotation provoque un écoulement d'eau radial approprié pour intercepter dans la direction radiale l'écoulement de fumée aspirée dans la direction axiale et pour pousser la poussière humide contre la surface intérieure dudit tambour (13) et sur l'hélice (18) pour l'éjection de celle-ci vers l'extérieur.

2. Un dispositif suivant la revendication 1, caractérisé en ce que ledit tambour rotatif (13) et ledit ventilateur à ailettes radiales (12) sont entraînés directement par un moteur (5), tandis que ledit ventilateur à ailettes axiales (17) et ladite hélice (18) pour éjecter la masse sont actionnés par un réducteur (7, 7a) entraîné à son tour par le moteur (5).

3. Un dispositif suivant la revendication 1, caractérisé en ce que ladite eau de lavage est amenée jusqu'audit corps central (16) à travers un conduit (22) coaxial avec l'axe de rotation dudit corps central.

4. Un dispositif suivant une ou plusieurs des revendications précédentes, caractérisé en ce qu'il prévoit des moyens d'évacuation (24), comme un déversoir, associés avec ledit tambour rotatif (13) et capables de drainer toute l'eau non utilisée pour incorporer la poussière.

5. Un dispositif suivant les revendications précédentes, caractérisé en ce que ledit conduit radial (2) pour évacuer la fumée épurée est constitué d'une spirale interne ou analogue.
